(19)

**Europäisches Patentamt**

**European Patent Office**

**Office européen des brevets**

(11) **EP 0 675 819 B2**

(12) **NEUE EUROPÄISCHE PATENTSCHRIFT**

(45) Veröffentlichungstag und Bekanntmachung des Hinweises auf die Entscheidung über den Einspruch:
**24.05.2000 Patentblatt 2000/21**

(45) Hinweis auf die Patenterteilung:
**07.05.1997 Patentblatt 1997/19**

(21) Anmeldenummer: **94904180.0**

(22) Anmeldetag: **23.12.1993**

(51) Int. Cl.[7]: **B60R 21/32**, B60R 22/46

(86) Internationale Anmeldenummer:
**PCT/EP93/03672**

(87) Internationale Veröffentlichungsnummer:
**WO 94/14638 (07.07.1994 Gazette 1994/15)**

(54) **VERFAHREN ZUR STEUERUNG  EINES FAHRZEUGINSASSEN-SCHUTZSYSTEMES**

PROCESS FOR CONTROLLING A SYSTEM FOR PROTECTING A CAR OCCUPANT

PROCEDE PERMETTANT DE COMMANDER D'UN SYSTEME VISANT A PROTEGER LES PASSAGERS D'UN VEHICULE

(84) Benannte Vertragsstaaten:
**DE FR GB**

(30) Priorität: **23.12.1992 EP 92121842**
**23.09.1993 EP 93115391**

(43) Veröffentlichungstag der Anmeldung:
**11.10.1995 Patentblatt 1995/41**

(60) Teilanmeldung:
**96103812.2 / 0 723 894**

(73) Patentinhaber:
**SIEMENS AKTIENGESELLSCHAFT**
**80333 München (DE)**

(72) Erfinder:
 • **BISCHOFF, Michael**
   **D-63791 Karlstein (DE)**
 • **GUGGENBERGER, Johann**
   **D-93098 Mintraching (DE)**
 • **LEIRICH, Oskar**
   **D-93073 Neutraubling (DE)**

(56) Entgegenhaltungen:
**EP-A- 0 440 133**          **EP-A- 0 511 556**
**EP-B- 0 458 796**

EP 0 675 819 B2

**Beschreibung**

Die Erfindung betrifft ein Verfahren für eine Steuereinheit, die bei einem genügend starken Unfall ein Schutzsystem für Insassen eines Fahrzeuges mittels eines Algorithmus auslöst, also z.B. ein Airbagsystem. Es kann sich aber auch z.B. um Systeme mit Gurtstrammern und/oder Überrollbügeln handeln.

Jene Merkmalskombination, die im Oberbegriff der Patentansprüche 1 und 2 definiert ist, ist für sich durch die Schrift EP-B1-0 458 796 = WO 90/09298 bekannt.

Dort handelt es sich nämlich um ein Verfahren zur Steuerung eines Fahrzeuginsassen-Schutzsystemes mit einem bei einem Unfall ein Verzögerungssignal liefernden Crashsensor. Eine Recheneinheit führt während des Unfalles, ab einem Startzeitpunkt, jeweils zumindest Integrationen und Vergleiche durch, nämlich eine zeitliche Integration des Verzögerungssignals, wodurch beim Unfall angenähert ein das Unfallgeschehen charakterisierender bisheriger Geschwindigkeitsverlust als ISTwert ermittelt werden. Sie führt ferner Vergleiche dieses ISTwertes mit einem solchen zeitlich variablen Auslöseschwellwert durch, der seinerseits von der Recheneinheit - direkt oder indirekt abhängig von den aktuellen Fluktuationen im Verlauf des Verzögerungssignales und damit abhängig von durch diese Recheneinheit ermittelten ISTwerten - zumindest während eines Teils des Unfallverlaufes ständig neu festgesetzt wird. Dort wird übrigens der ermittelte crashbedingte Geschwindigkeitsverlust jeweils erst durch die bisherige Gesamtdauer des Unfallgeschehens dividiert, um mittels der Recheneinheit ISTmittelwerte der bisherigen Verzögerungen zu ermitteln.

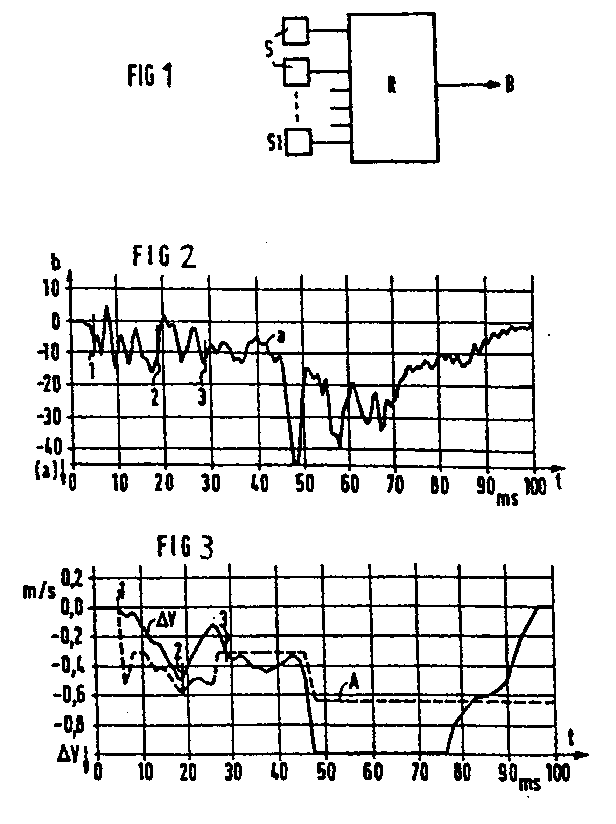

Ähnlichkeiten vor allem mit dem im Oberbegriff der Patentansprüche 1 und 2 definierten Verfahren besitzt auch das durch DE-C2-41 17 811 bekannte Verfahren. Dort werden die durch den Crashsensor gemessenen Verzögerungen einerseits direkt über den ersten Eingang eines Subtraktionsgliedes, und andererseits um einen bestimmten Betrag verzögert über den zweiten Eingang dieses Subtraktionsgliedes, dem Eingang eines Integrators zugeleitet, um den "partiellen" IST-Geschwindigkeitsverlust zu ermitteln. Zwar werden dort nicht unterschiedlich große Winkel für den Schrägaufprall mit eigenen Schwellwerten unterschieden. Unterschieden wird jedoch zwischen frontalem und schrägen Aufprall durch unterschiedlich hohe Auslöseschwellwerte. Gemäß der dortigen Figur 3 können dazu zwei, mit unterschiedlichen Verzögerungen ansprechende Subtraktionsglieder und zwei Integratoren angebracht werden, um den zwei verschiedenen ISTwerten für partielle IST-Geschwindigkeitsverluste - einen für Frontalaufprall und einen für Schrägaufprall - zwei verschiedene Auslöseschwellwerte zuzuordnen.

Gemäß den dortigen Figuren 3 und 6 und der gemäß zugehörenden Beschreibung, insbesondere in Spalte 2, Zeile 63 bis Spalte 3, Zeile 4, Spalte 5, Zeilen 17 bis 56 sowie Spalte 4, Zeilen 6 bis 10 und 41 bis 68, wird zusätzlich die Härte des Aufralles innerhalb zumindest einer der beiden Aufprallrichtungen dadurch berücksichtigt, daß die Recheneinheit zusätzlich den bestimmten, dieser Richtung zugeordneten Auslöseschwellwert mittels eines "Schwellwertschalters" auf einen anderen starren Wert umschaltet, abhängig insbesondere von der Steilheit, mit der sich die betreffende Beschleunigung ändert.

Bei vielen bekannten Algorithmen - zumindest bei Teilalgorithmen davon - , wird bereits zwischen verschiedenen Arten von Unfällen differenziert, vor allem hinsichtlich der Aufprallrichtung. Z.B. gilt je nach Aufprallrichtung ein anderer Teilalgorithmus, vgl. damit die WO 90/11207. In dort beschriebenen Beispielen werden Sensorsignale / ISTwerte durch Teilalgorithmen mit zugeordneten Auslöseschwellwerten verglichen, was JA/NEIN-Ergebnisse bzw. EINS/NULL-Ergebnisse ergibt. Durch eine Bool'sche Verknüpfung wird schließlich entschieden, welcher Teilalgorithmus wirksam sein soll, indem nur derjenige ihm zugeordnete obere oder untere Auslöseschwellwert sowie nur derjenige, diesem Auslöseschwellwert unmittelbar zugeordnete ISTwert, welcher der betreffenden Aufprallrichtung zugeordnet ist, endgültig die Steuerung der Auslösung beeinflussen.

Z.B. in der EP-A1-0 292 669 wird zwar hinsichtlich der unterschiedlichen Verläufe der ISTwerte innerhalb derselben Aufprallrichtung differenziert. Dort wird eine Höchstgeschwindigkeitsgrenze A2 festgelegt, oberhalb der die Auslösung blockiert, also unterlassen wird, vgl. die Figur 1 des vorliegenden Schutzrechtes, sowie eine Mindestgeschwindigkeitsgrenze A1, unterhalb der die Auslösung ebenfalls blockiert, also unterlassen wird. Innerhalb derselben Aufprallrichtung wird aber der betreffende ISTwert nur mit der in sich starren Obergrenze A2 - z.B. Höchstgeschwindigkeit A2 - und / oder mit der in sich starren Mindestgrenze A1 - z.B. Mindestgeschwindigkeit AI - verglichen. Die ISTwerte sind dort also starren, konstanten Auslöseschwellwerten A1, A2 zugeordnet.

Dies stellt aber aus der Sicht der Erfindung einen nicht mehr akzeptierbaren Nachteil dar, weil die Auslösung zu sehr verzögert und oft sogar fälschlicherweise ganz verhindert wird. Dann kann nämlich der optimale Auslösezeitpunkt schon längst vorbei sein, sobald schließlich der ISTwert I1 als letzter seinen Auslöseschwellwert A1 erreicht.

Durch die Schrift EP-B1-0 327 853 ist bekannt, daß eine Recheneinheit durch eine doppelte Integration des Verzögerungssignales die crashbedingte Vorverlagerung der Fahrzeuginsassen errechnet, abhängig von Randbedingungen wie von der jeweiligen Position- und der eigenen Federkraft des Sitzes dieses Insassen, auch abhängig davon, ob sich dieser Insasse am Lenkrad abstützt und ob er angeschnallt ist, und abhängig vom Zeitaufwand bis zum Wirksamwerden des Schutzsystemes, - wobei mittels eines zweiten, in Querrichtung zur Fahrzeugachse orientierten Crashsensors auch eine Richtungscharakteristik des Schwellwertes angestrebt wird. Dieses Verfahren ermittelt vor allem auch den optimalen Zündzeitpunkt für die Auslösung. Der Auslöseschwellwert selbst ist jeweils zeitlich konstant, auch wenn er von jenen Randbedingungen wie vom Anschnallen mittels des Gurtes abhängt.

Die Aufgabe der Erfindung, mit wenig Hardwareaufwand den Auslöseschwellwert individuell dem betreffenden Unfallgeschehen jeweils sofort und besonders gut dosiert anzupassen, wird durch Verfahren gelöst. Bei der Erfindung fluktuiert der Auslöseschwellwert i.allg. besonders rasch abhängig von ISTwerten.

Typisch für die Erfindung und damit auch für ihre beiden Varianten ist, daß ihre momentan gültigen Auslöseschwellwerte - zumindest innerhalb bestimmter Crashverlaufphasen - ständig rasch, i.allg. um kleine Beträge, nach oben und unten fluktuieren können. Die Erfindung setzt also zeitlich variable Auslöseschwellwerte fest, um - sogar für ein und dieselbe Aufprallrichtung - zwischen unterschiedlichen Aufprallsituationen besonders feinfühlig angepaßt differenzieren zu können. Der Auslöseschwellwert ist z.B. abhängig vom bisherigen Verlauf der gemessenen Verzögerungen, d.h. von den ISTwerten der Verzögerungen. Die momentan gültigen Auslöseschwellwerte fluktuieren sogar dann ständig nach oben und unten, falls während des betreffenden Crashverlaufes NUR ERHEBLICHE Verzögerungen auftreten! Die Erfindung gestattet, den Algorithmus auch so zu gestalten, daß das Schutzsystem auch dann rechtzeitig auslöst,- falls das Fahrzeug vorne mehr oder weniger seitlich versetzt - je nach Fahrzeugtyp und Aufprallstelle mit seinen weichsten Karosserieteilen oder auch mit seinen steifesten Karosserieteilen - gegen einen niedrigen Block stößt. Dabei benötigt die Erfindung sogar besonders wenig Hardwareaufwand. Die bisherige Dauer des Unfallgeschehens wird berücksichtigt, indem erst in späten Phasen dieses Unfalles auftretende Verzögerungswerte nur noch vergleichsweise wenig Einfluß auf die laufenden Fluktuationen des festzusetzenden Auslöseschwellwertes besitzen, wobei aber Verzögerungswerte, die bei Beginn der vom Sensor gemessenen Erschütterungen auftreten, sehr rasch einen extrem hohen Auslöseschwellwert erzeugen, so daß bei kurzen harten Stößen - z.B. durch Straßenlöcher oder Bordsteinkanten - die Auslösung des Schutzsystemes zuverlässig vermeidbar ist.

Die Erfindung ist nicht auf Verfahren beschränkt, bei dem die Recheneinheit nur einen einzigen speziellen ISTwert mit spezieller physikalisch-mathematischer Dimension - z.B. IST-Geschwindigkeitsverlust oder IST-Verzögerungsmittelwert - ermittelt. Es können also in der erfindungsgemäß betriebenen Steuereinheit auch mehrere ermittelte ISTwerte mit unterschiedlichen physikalisch-mathematischen Dimensionen benutzt sein.

Der Schwerpunkt der Erfindung liegt in erster Linie gar nicht so sehr darauf, daß sie unterschiedliche Auslöseschwellwerte für unterschiedliche Aufprallrichtungen benutzt. Solche Unterschiede sind allerdings durchaus auch bei den erfindungsgemäßen Algorithmen nützlich und oft beabsichtigt, wie noch gezeigt wird. Statt dessen differenziert die Erfindung vor allem schon hinsichtlich der unterschiedlichen möglichen Verläufe der ISTwerte innerhalb ein und derselben Aufprallrichtung, indem sie den betreffenden ermittelten ISTwerten hierfür fluktuierende Auslöseschwellwerte zuordnet.

Bei der Erfindung kann zwar der Algorithmus ebenfalls eines oder mehrere Ergebnisse der Teilalgorithmen nach Bool'schen Regeln verknüpfen. Bei der Erfindung ist aber zumindest einer der Auslöseschwellwerte nicht mehr durch einen starren Wert starr festgelegt, sondern durch einen variierbaren Auslöseschwellwert.

Die Erfindung gestattet, eine große Vielzahl von Algorithmen erfindungsgemäß zu nutzten, wie unten detailliert gezeigt wird. Wegen dieser Vielfalt kann der Algorithmus optimal an jenen Bedarf angepaßt werden, der sich aus Crashtests des jeweils betreffenden Fahrzeugtypes ergibt.

Die in den Patentansprüchen definierten Verfahren gestatten, zusätzliche Vorteile zu erreichen. U.a. gestatten nämlich die Maßnahmen gemäß dem Patentanspruch

3, eine besonders wenig Hardwareaufwand benötigende erste Variante der Erfindung zu bieten, die - sogar für ein und dieselbe Aufprallrichtung - zwischen unterschiedlichen Aufprallsituationen besonders feinfühlig zu differenzieren ermöglicht, und zwar auch dann, falls das Fahrzeug vorne mehr oder weniger seitlich versetzt - je nach Fahrzeugtyp und Aufprallstelle mit seinen weichsten Karosserieteilen oder auch mit seinen steifesten Karosserieteilen - gegen einen niedrigen Block stößt,

1, durch besonders starke Berücksichtigung des speziell während der letzten kurzen Zeitdauer eingetretenen Geschwindigkeitsverlustes besonders gut dosiert auf besondere, während dieser kurzen Zeitdauer eingetretene Unfallumstände eingehen zu können, was z.B. bei einem rasch aufeinander folgenden Mehrfachaufprall - z.B. auf nacheinander mehrere massive Latten eines Zaunes - besonders günstig ist,

2, durch Berücksichtigung des während der gesamten Unfalldauer bisher eingetretenen gesamten IST-Geschwindigkeitsverlustes auch mechanisch-physikalische Eigenschaften des Hindernisses, z.B. dessen Gewicht und / oder Relativgeschwindigkeit, berücksichtigen zu können,

1 und 2, auch solche markanten Fluktuationen des Verzögerungssignales zu berücksichtigen, die in schon vergangenen Phasen dieses Unfalles auftraten und damit z.B. für den betreffenden speziellen Fahrzeugtyp typische Phänomene darstellen für den Aufprall aus einer bestimmten Richtung und / oder für den Aufprall auf nachgiebige oder auf sehr massereiche Hindernisse,

1 und 2, solche Vergangenheitswerte zu benutzen, die besonders charakteristisch sind zur Unterscheidung

* einerseits

   ** von entweder solchen Hindernissen, die zunächst hart, dann aber ziemlich nachgiebig sind, wie z.B. nicht sehr dicke, abknickende Bäumchen oder Zäune oder relativ nachgiebige Teile eines gegnerischen Fahrzeuges wie z.B. dessen Kofferraum,
   ** oder vor allem auch von solchen Hindernissen, die schräg aufprallen,

* von andererseits

   ** entweder solchen Hindernissen, die wenig nachgiebig sind,
   ** oder vor allem auch von frontal aufprallenden Hindernissen,

4, den betreffenden Vergangenheitswert zur dosierten Anhebung oder Absenkung des Auslöseschwellwertes zu benutzen,

5 und 6, eine noch besser optimierte Dosierung der Anhebung / Absenkung des Auslöseschwellwertes zu ermöglichen, wobei diese Relativbeträge der betreffenden Differenzen ebenfalls Rückschlüsse auf die Aufprallrichtung - und sonstige typische Unfallmerkmale wie Aufprall auf Pfähle oder seitenversetzter Aufprall, abhängig vom betreffenden Fahrzeugtyp - zulassen,

7, durch diese Relativwert-Ermittlungen indirekt vor allem die IST-Fahrzeuggeschwindigkeit berücksichtigen zu können,

8, insbesondere bei einem rasch aufeinander folgenden Mehrfachaufprall, z.B. bei einem Aufprall auf nahe beieinander stehende Bäumchen oder Zaunteile - oder bei einem Aufprall mit relativ weichen Teilen des eigenen Fahrzeuges - , nur den jeweils letzten dieser Aufpralle als mitentscheidend für die folgende Festsetzung des Auslöseschwellwertes benutzen zu können,

9, einen einfachen, rasch durch die Recheneinheit erledigbaren Algorithmus benutzen zu können,

10, durch die Gewichtung auf besonders einfache Weise eine optimale Anpassung des Auslöseschwellwert-Verlaufes an den jeweiligen Fahrzeugtyp zu ermöglichen,

11, anpaßbar an den betreffenden Fahrzeugtyp, Grenzwerte für den Auslöseschwellwert so festzulegen, daß auch unter extremen Umständen die Auslösung angemessen gesteuert wird,

12, eine weitere Untervariante für eine kontinuierliche Veränderung der Auslöseschwellwerte anzuwenden, und

13, im Algorithmus zusätzlich die JA-/NEIN-Kriterien zu berücksichtigen, also z.B. zu berücksichtigen,

* ob Beifahrersitze belegt sind oder nicht, um das speziell für diese Sitze angebrachte Schutzsystem nur dann auszulösen, wenn dort wirklich ein Beifahrer sitzt, oder

* ob der zu schützende Insasse einen Sicherheitsgurt anlegte oder nicht, weil ein Angegurteter das Schutzsystem erst bei einem stärkeren Crash benötigt als ein Nichtangegurteter.

Die Erfindung und Weiterbildungen derselben werden anhand der in den Figuren 2 bis 8 gezeigten erfindungsgemäßen Beispiele weiter erläutert, welche der Übersichtlichkeit wegen jeweils möglichst einfach dargestellt wurden. Dabei zeigt die Figur

1 ein Schaltschema einer erfindungsgemäß betreibbaren Steuereinheit,

2 einen Verlauf des Verzögerungssignales, welcher dem Verlauf der Beschleunigung b / Verzögerung a zumindest angenähert entspricht,

3 einen - dem in der Figur 2 gezeigten Verlauf in etwa entsprechenden - Verlauf eines ermittelten partiellen IST-Geschwindigkeitsverlustes sowie den zugehörenden Verlauf des jeweils momentan festgesetzten Auslöseschwellwertes, und

4 einen - dem in der Figur 2 gezeigten Verlauf in etwa entsprechenden - Verlauf der Vorverlagerung des Insassen,

5 beispielhaft und schematisch einen stark vergrößerten Ausschnitt aus der Figur 3, und zwar aus dem Verlauf des partiellen IST-Geschwindigkeitsverlustes.

Die Figur 1 zeigt also ein Beispiel für die erfindungsgemäß betreibbare Steuereinheit, die bei einem genügend starken Crash das Schutzsystem auslöst. Diese Steuereinheit enthält mehrere Sensoren S, S1 sowie die Recheneinheit R. Letztere kann ein erfindungsgemäßes Steuersignal B zum Auslösen des Schutzsystemes erzeugen, abhängig von mehreren, den Unfallverlauf beschreibenden ISTwerten, welche ihrerseits von der Recheneinheit R aus den Sensorsignalen ermittelt werden.

Das Besondere an dieser Steuereinheit ist vor allem der durch die Recheneinheit R benutzte Algorithmus.

Es reicht häufig, einen einzigen Crashsensor zu benutzen, um die Steuerung des gegen Frontal- und Schrägaufprall schützenden Insassenschutzsystemes, z.B. einen entsprechenden Airbag, zu steuern, auch wenn der Winkel der Aufprallrichtung recht unterschiedlich sein kann. Der für die Erfindung nötige Aufwand ist also schon insofern gering. Die Empfindlichkeit dieses Crashsensors kann im wesentlichen nach vorne hin gerichtet sein. Sein Ausgangssignal entspricht der ISTverzögerung des Fahrzeuges, genauer: der Verzögerung des Crashsensors in diesem Fahrzeug. Zur Steuerung eines gegen Seitenaufprall schützenden Insassenschutzsystemes, z.B. eines Seitenairbag, kann an sich aber auch ein zusätzlicher, an den Seitenaufprall angepaßt orientierter Crashsensor benutzt werden. Auch sein Ausgangssignal kann in erfindungsgemäßer Weise mit fluktuierenden Auslöseschwellwerten ausgewertet werden.

Das vom Crashsensor gelieferte Verzögerungssignal kann bei Bedarf - z.B. zur Unterdrückung höherfrequenter Eigenvibrationen des Crashsensors - mittels eines Frequenzfilters zusätzlich geglättet werden und / oder sonstige Korrekturen aufweisen, z.B. um eine bessere Linearisierung der Größe des Verzögerungssignales, bezogen auf den jeweils tatsächlich vorliegenden ISTverzögerungswert, zu erreichen.

Die Figur 2 zeigt beispielhaft den typischen Verlauf des Verzögerungssignales a eines nach vorne gerichteten Crashsensors bei einem Aufprall eines ca. 50 km/h fahrenden bestimmten Fahrzeugtypes schräg unter 30° auf ein stehendes Hindernis. In der Abszisse ist die Zeit t in msec-Einheiten angegeben, in der Ordinate die Beschleunigung b in g-Einheiten, also als Vielfache der Erdbeschleunigung g = 10 m/sec$^2$. Nach ca. 45 msec treten extrem starke Verzögerungen a von weit über 10 g auf, wobei erst nach 87 msec die Verzögerung a wieder unter 10 g absinkt. Es sei der Einfachheit wegen angenommen, daß der betreffende Crashsensor korrigierte Verzögerungssignale an die Recheneinheit liefert, daß also die Amplitude der Verzögerungssignale a linear von der wahren Verzögerung a abhängt.

Die zur Auswertung des Verzögerungssignales a benutzte Recheneinheit führt während des Unfalles, z.B. ab dem -in der Figur 2 gezeigten - vom Verzögerungssignal a triggerbaren - Startzeitpunkt 1, ständig Integrationen bis zum jeweils momentanen Zeitpunkt tx durch, z.B. um so den jeweiligen IST-Geschwindigkeitsverlust ΔV zu ermitteln.

Zum Integrieren kann auch ein "Akkumulatorregister" benutzt werden, also ein Register, in welchem nicht das digitalisierte IST-Verzögerungssignal a gespeichert wird, sondern in welchem laufend der momentane ISTverzögerungswert a zum bisher dort gespeicherten ISTwert ADDIERT wird.

Zur Berechnung des partiellen IST-Geschwindigkeitsverlustes ΔV benutzt man eine zeitliche einfache Integration des jeweiligen ISTverzögerungssignals a über eine im Vergleich zur Dauer des Crashvorganges kurze Zeitdauer ΔT:

$$\Delta V \;\; = \;\; \int\limits_{tx - \Delta T}^{tx} a \cdot dt$$

Zur Berechnung dieses partiellen IST-Geschwindigkeitsverlustes ΔV kann man an sich, ähnlich wie in der Schritt DE-C2-41 17 811 beschrieben, auch ein Subtraktionsglied benutzen. Man kann dazu aber z.B. auch zwei Akkumulatorregister benutzen, wobei im ersten dieser Register wie oben beschrieben die IST-Verzögerungswerte a zur ersten Integration von tl bis tx laufend addiert, und im zweiten dieser Register, um ΔT verzögert, dieselben IST-Verzögerungswerte a zur Integration von t1 bis (tx-ΔT) addiert werden, wonach schließlich die Differenz der in den beiden Akkumulatorregistern jeweils gespeicherten Werte den partiellen IST-Geschwindigkeitsverlust ΔV darstellt.

Jene Zeitdauer ΔT beträgt je nach Bedarf z.B. 5 msec oder 7 msec, so daß diese Zeitdauer in den fortgeschrittenen Unfallphasen jeweils erst nach dem Startzeitpunkt 1 beginnt und wodurch in diesen späteren Unfallphasen diese kurze Zeitdauer ΔT kurzer ist als die bisherige Dauer (tx-t1) des Unfalls, vgl. die Zeitangaben in der Figur 5.

Jener Verlauf des ΔV, der zum Verlauf der in der Figur 2 gezeigten Verzögerung a gehört, ist beispielhaft in der Figur 3 als ausgezogene Linie in m/sec-Einheiten gezeigt - wobei dieser Verlauf des ΔV im Bereich von t = 48 bis 76 msec zwar von der Recheneinheit ermittelt, aber aus Maßstabsgründen in dieser Figur 3 nicht mehr maßstabsrichtig eingetragen ist.

In dieser Figur 3 ist außerdem gestrichelt der Verlauf des Auslöseschwellwertes A eingetragen, der jeweils laufend in den verschiedenen Zeitpunkten tx durch die Recheneinheit festgesetzt wird - für die Formeln, mit denen die betreffenden Auslöseschwellwerte A festgesetzt werden können, werden später Beispiele angegeben.

Die Recheneinheit vergleicht ständig den von ihr selbst ermittelten - hier beispielhaft partiellen - IST-Geschwindigkeitsverlust ΔV mit dem ebenfalls von ihr selbst ermittelten, zeitlich variablem Auslöseschwellwert A.

Gemäß der Wortwahl im vorliegenden Schutzrecht soll ein "großer" (bzw. "kleiner") Geschwindigkeitsverlust bedeuten,

- daß die Geschwindigkeit um einen großen (kleinen) Absolutbetrag abnahm.

Außerdem soll hier ein "großer" (bzw. "kleiner") Auslöseschwellwert A bedeuten,

- daß dieser Auslöseschwellwert A nur bei einem großen (bzw. schon durch einen kleinen) Geschwindigkeitsverlust ΔV erreicht werden kann,

- oder z.B. daß dieser Auslöseschwellwert A nur bei einem großen (bzw. kleinen) Absolutbetrag der Verzögerung a - oder auch eines ISTmittelwertes $\bar{a}$ der bisherigen Verzögerungen a - erreicht werden kann.

In die beiden, in der Figur 3 gezeigten Verläufe sind die Zeitpunkte 1 bis 3 eingetragen, die auch in der Figur 2 angegeben sind:

1 ist der Startzeitpunkt t1, bei dem die Recheneinheit beginnt zu integrieren, und 3 ist der Zeitpunkt, bei dem der ΔV-Verlauf den gestrichelt eingetragenen Verlauf des variablen Auslöseschwellwertes A schneidet - bei diesem Schnittpunkt / Zeitpunkt 3 trifft die Recheneinheit die endgültige Entscheidung, daß das Schutzsystem auszulösen ist.

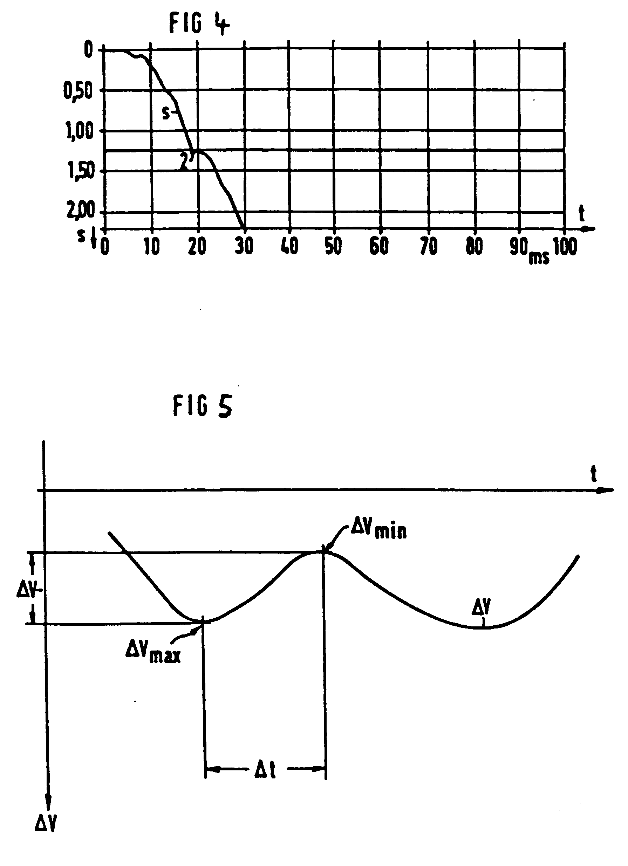

Der Zeitpunkt 2 ergibt sich beim gezeigten Beispiel aus der Figur 4. Dort ist der Verlauf der Vorverlagerung s des Insassen gezeigt, welche die Recheneinheit durch doppelte zeitliche Integration der Verzögerung a ermittelt, bezogen z.B. auf die gesamte Unfalldauer seit dem Startzeitpunkt 1, z.B. nach der Formel:

$$ s \quad = \quad \int_{t1}^{\infty} \left( \int_{t1}^{\infty} a \cdot dt \right) \cdot dt $$

oder unter Berücksichtigung weiterer Faktoren, vgl. z. B. die oben bereits erwähnte Schrift EP-B1-0 327 853. Doppelte Integrationen dieser Art kann man im Prinzip z.B. mittels zwei Akkumulatorregister erreichen, indem z.B. das in dem einem dieser Register gespeicherte Ergebnis der ersten Integration zusätzlich laufend zu dem im anderen dieser Register bisher gespeicherten Wert addiert wird - das im zweiten Register momentan gespeicherte Ergebnis entspricht dann dem ISTwert des doppelten Integrals.

Sobald im gezeigten Beispiel die Vorverlagerung s einen (unteren) Grenzwert, der im in der Figur 4 gezeigten Beispiel bei 1,25cm liegt, überschreitet, entscheidet die Recheneinheit aber nur, daß ausgelöst werden DARF. Die Recheneinheit entscheidet aber erfindungsgemäß erst im Zeitpunkt 3 endgültig, ob überhaupt ausgelöst werden MUSS.

Weil im Beispiel, das die Figur 3 zeigt, der Zeitpunkt 2 vor dem Zeitpunkt 3 liegt, veranlaßt die Recheneinheit sofort im Zeitpunkt 3 auch die Auslösung des Schutzsystemes. Läge aber in der Figur 3 der Zeitpunkt 2 erst nach dem Zeitpunkt 3, dann hätte die Recheneinheit zum Zeitpunkt 3 zwar festgelegt, daß ausgelöst werden muß, - die Recheneinheit hätte aber erst zum dann späteren Zeitpunkt 2 die Auslösung endgültig gestartet, z.B. durch Zünden der Sprengladung eines Airbag.

An sich ist es, wie für sich bekannt ist, günstig, zusätzlich einen oberen Auslöseschwellwert für die ermittelte Vorverlagerung s festzulegen, oberhalb welchem das Schutzsystem NICHT mehr ausgelöst werden darf. Um aber die vorliegende Beschreibung nicht zu kompliziert werden zu lassen, wird in der Figur 4 nicht näher auf diesen zusätzlichen, oberen Auslöseschwellwert eingegangen. Der Fachmann wird keine Schwierigkeiten haben, im erfindungsgemäßen Verfahren zusätzlich einen solchen oberen Auslöseschwellwert für s durch eine entsprechende Ergänzung des Algorithmusses zu berücksichtigen. - Die Erfindung läßt also zu, daß ihre Recheneinheit ebenfalls die IST-Vorverlagerung s des Insassen berücksichtigt, insbesondere um den Zündzeitpunkt des Schutzsystemes zu optimieren. Vgl. z.B. die EP-B1-0 327 853.

Die Figur 3 zeigt, daß die Recheneinheit dem jeweils ermittelten ISTwert - hier dem partiellen IST-Geschwindigkeitsverlust ΔV bezogen auf die Zeitdauer ΔT - einen variablen momentanen Auslöseschwellwert A zuordnet, der - hier jedenfalls in der Zeit zwischen 5 und 27 msec - ständig abwechselnd um im momentan meistens kleine, aber jeweils unterschiedliche Beträge größer und wieder kleiner wird. Beim gezeigten Beispiel fluktuiert also der Auslöseschwellwert A nicht zwischen einem stets gleichen Maximalwert und niedrigeren Zwischenwerten, sondern - zumindest während längerer Unfallphasen - laufend fluktuierend zwischen im Prinzip beliebigen Werten hin und her.

Bei der Erfindung kann also der zeitliche Verlauf von ermittelten ISTwerten, also z.B. für ermittelte Geschwindigkeitsverluste ΔV und / oder für ermittelte IST-Verzögerungsmittelwerte $\bar{a}$, innerhalb der Entscheidungsphase im Prinzip jeweils schnell nacheinander mehrere Maxima (also starke Geschwindigkeitsverluste / starke Verzögerungen) und mehrere Minima (also geringe Geschwindigkeitsverluste / geringe Verzögerungen) aufweisen. Dabei kann sich der Auslöseschwellwert A im allgemeinen sogar ähnlich schnell wie der jeweils ermittelte ISTwert ΔV ändern, und zwar jeweils um fein dosierte größere und kleinere Beträge nach oben und unten, die individuell dem betreffenden Unfallgeschehen feinfühlig angepaßt sind.

Bevor auf die Struktur eines Algorithmusses, mit dem die Recheneinheit den momentanen Auslöseschwellwert erfindungsgemäß berechnen kann, eingegangen wird, soll zuerst auf weitere Möglichkeiten der Bildung ermittelter ISTwerte eingegangen wurde.

Die Figur 3 zeigt, daß die erfindungsgemäß betriebene Recheneinheit zusätzlich den momentanen Auslöseschwellwert A in bestimmten Zeiten auf bestimmte, an den betreffenden Fahrzeugtyp angepaßte Auslöseschwellwerte mehr oder weniger starr - statt fluktuierend - vorgeben kann, vgl. die relativ späten Unfallphasen von 27 bis 100 msec, in denen der Auslöseschwellwert A an sich Extremwerte nach oben und unten annehmen würde, falls er dann weiterhin fluktuieren würde. Dadurch kann die Recheneinheit die Auslöseentscheidung auch noch unter solchen extremen Sonderbedingungen dieses Unfallgeschehens angemessen, also wohldosiert, treffen. Dazu setzt die Recheneinheit ausnahmsweise - z.B. zeitgesteuert für eine bestimmte Zeitdauer, vgl. 27 bis 46 msec - einen dem Fahrzeugtyp angepaßten - hier relativ hohen - Auslöseschwellwert A fest, obwohl der Algorithmus, welcher der Recheneinheit die Berechnung des momentanen Auslöseschwellwertes A vorschreibt, an sich zunächst deutlich kleinere Werte für den dortigen Auslöseschwellwert A ergäbe. Auch z.B. für die Zeitdauer zwischen 48 bis 100 msec setzt die Recheneinheit in ähnlicher Weise einen weiteren Auslöseschwellwert A fest, obwohl derselbe Algorithmus im Prinzip auch dort zunächst noch viel größere Werte für den dortigen Auslöseschwellwert A ergäbe.

Die Erfindung läßt also zu, zur Berücksichtigung von Sonderbedingungen, angepaßt an die besonderen Eigenschaften des betreffenden Fahrzeugtypes, den Auslöseschwellwert A für bestimmte Phasen des Unfallgeschehens ausnahmsweise auch als zeitlich konstanten Wert zu behandeln, oder ihn in diesen Phasen sonstwie unabhängig vom momentanen bzw. bisherigen Verlauf von ermittelten ISTwerten zu machen. Diese Auslöseschwellwerte können, an den betreffenden Fahrzeugtyp angepaßt, starr z.B. so vorgegeben werden,

* daß der betreffende ermittelte ISTwert bei einem (nicht allzu) langsamen 30°-Schrägaufprall immer noch diesen vorgegebenen Auslöseschwellwert A leicht genug erreichen kann und dann das Schutzsystem auslöst,
* und / oder so, daß der mit dem vorgegebenen Auslöseschwellwert A verglichene ermittelte ISTwert bei einem besonders langsamen Frontalaufprall nicht mehr den Auslöseschwellwert erreicht und damit das Schutzsystem nicht mehr auslöst.

Die Recheneinheit setzt aber während allen übrigen Unfallphasen einen zeitlich rasch variablen Auslöseschwellwert A laufend neu fest, mittelbar oder unmittelbar abhängig von den momentanen Fluktuationen im Verlauf des Verzögerungssignales a und damit abhängig von dem ISTwert / von den ISTwerten, vgl. den partiellen Geschwindigkeitsverlust ΔV. Für die besonders bei hohen Fahrgeschwindigkeiten und bei Frontalaufprall besonders kritischen frühen Zeitabschnitte des Unfallgeschehens - im gezeigten Beispiel <27 msec - fluktuiert also erfindungsgemäß der von der Recheneinheit festgesetzte Auslöseschwellwert A deutlich erkennbar laufend sehr rasch in der erfindungsgemäß feindosierten Weise.

Die Erfindung gestattet, diese rasche erfindungsgemäße Veränderung der Auslöseschwellwerte A mit sogar relativ wenig technischem Aufwand zu erreichen, nämlich mit Hilfe eines entsprechenden Betriebes der das Verzögerungssignal a wohldosiert auswertenden, ohnehin vorhandenen Recheneinheit.

Die Erfindung gestattet damit, speziell die während einer letzten kurzen Zeitdauer, vgl. ΔT, eingetretenen Verzögerungen a / Geschwindigkeitsverluste ΔV besonders gut dosiert zu berücksichtigen. Dies ist besonders bei einem rasch aufeinander folgenden Mehrfachaufprall - z.B. auf nacheinander mehrere Latten eines Zaunes - günstig.

Die Erfindung ist aber nicht auf ein Verfahren beschränkt, bei dem die Recheneinheit nur ISTwerte mit der oben dargelegten speziellen physikalisch-mathematischen Dimension "partieller Geschwindigkeitsverlust" ermittelt, um diesen mit einem laufend neu festgesetzten, nach oben und unten fluktuierenden Auslöseschwellwert A zu vergleichen. Die Recheneinheit kann im Prinzip auch andere ISTwerte mit anderen physikalisch-mathematischen Dimensionen ermitteln, um diese ISTwerte mit einem entsprechenden - ebenfalls von der Recheneinheit laufend neu festgesetzten - nach oben und unten fluktuierenden Auslöseschwellwert A zu vergleichen. Z.B. gestattet die Erfindung, auch einen IST-Verzögerungsmittelwert $\bar{a}$ zu ermitteln und diesem ISTwert einen erfindungsgemäß rasch und feingestuft fluktuierenden Auslöseschwellwert A zuzuordnen. Betrachtet sei dazu wieder der in der Figur 2 beispielhaft gezeigte Verlauf des Verzögerungssignales a eines nach vorne gerichteten Crashsensors:

Die zur Auswertung des Verzögerungssignales a benutzte Recheneinheit führt auch hier während des Unfalles, ab dem - z.B. vom Verzögerungssignal a triggerbaren - Startzeitpunkt 1 = tl, u.a. auch die Integrationen durch. Beispielhaft sei hier zusätzlich angenommen, daß die Recheneinheit diesen IST-Verzögerungsmittelwert $\bar{a}$ fur den betreffenden Fahrzeugtyp nicht durch eine Division des partiellen IST-Geschwindigkeitsverlustes durch die gesamte bisherige Dauer des Unfalles, sondern durch eine Division des gesamten bisherigen Geschwindigkeitsverlustes durch die gesamte bisherige Dauer des Unfalls seit dem Startzeitpunkt 1 ermittelt.

Dann fuhrt also die Recheneinheit zunächst eine zeitliche einfache Integration des IST-Verzögerungssignals a über die gesamte Zeitdauer (tx - t1) durch, um den gesamten bisherigen Geschwindigkeitsverlust als ISTwert zu ermitteln:

$$\Delta V = \int_{t1}^{tx} a \cdot dt$$

Anschließend dividiert die Recheneinheit diesen ΔV-ISTwert durch die seitdem Startzeitpunkt 1 abgelaufene Zeitdauer des Crashverlaufes, wodurch sie angenähert den auf den Startzeitpunkt 1 bezogenen IST-Verzögerungsmittelwert $\bar{a}$ ermittelt:

$$\bar{a} = \Delta V / (tx-t1).$$

Die Recheneinheit vergleicht anschließend den so ermittelten ISTwert $\bar{a}$ mit einem von ihr erfindungsgemäß festgesetzten Auslöseschwellwert A.

Diese ermittelten ISTwerte $\bar{a}$ fluktuieren übrigens umso geringer, je größer die Zeitdauer (tx-t1) ist. Vor allem aber dann, wenn der betreffende Geschwindigkeitsverlust ∆V jeweils den partiellen Geschwindigkeitsverlust darstellt, was in der Figur 3 angenommen wurde, dann sind jene Fluktuationen des betreffenden IST-Verzögerungsmittelwertes $\bar{a}$, die erst in späten Phasen dieses Unfalles auftreten, nur noch vergleichsweise klein, weil durch die gesamte Zeitdauer (tx-t1) seit dem Startzeitpunkt 1 dividiert wird, wobei aber IST-Verzögerungsmittelwerte $\bar{a}$, die bei Beginn des (vermeintlichen) Unfallgeschehens auftreten, oft sehr rasch einen extrem hohe Beträge besitzen. Falls die Recheneinheit den momentanen Auslöseschwellwert A anhand des IST-Verzögerungsmittelwertes $\bar{a}$ bildet, dann besitzen die IST-Verzögerungsmittelwerte $\bar{a}$ in diesen späten Unfallphasen oft nur noch wenig Einfluß auf die laufenden Fluktuationen des festzusetzenden Auslöseschwellwertes A.

Der Verlauf dieses IST-Verzögerungsmittelwertes $\bar{a}$ entspricht zwar nicht genau dem Verlauf des in der Figur 3 gezeigten Verlaufes des partiellen Geschwindigkeitsverlustes ∆V, wenn das Verzögerungssignal a gemäß der Figur 2 verläuft. Der Verlauf des IST-Verzögerungsmittelwertes $\bar{a}$ stellt dann aber erfindungsgemäß trotzdem eine recht unruhig nach oben und unten fluktuierende Kurve dar. Auch der Auslöseschwellwert A kann dann ähnlich wie in der Figur 3 fluktuieren, wenn der Verlauf des Auslöseschwellwertes A erfindungsgemäß festgesetzt wird. Die Recheneinheit vergleicht dann ständig den von ihr ermittelten IST-Verzögerungsmittelwert $\bar{a}$ mit dem von ihr feindosiert variabel festgesetzten Auslöseschwellwert A. - Auch bei dieser Untervariante der Erfindung kann aber die Recheneinheit für Sonderverhältnisse die momentanen Auslöseschwellwerte A zeitweise starr statt fluktuierend vorgeben.

Die Erfindung gestattet also, spezielle mechanisch-physikalische Eigenschaften des Hindernisses, z.B. dessen Gewicht und / oder Relativgeschwindigkeit, insbesondere aus dem Verlauf von solchen - oder sonstigen - ermittelten ISTwerten angenähert zu erkennen, bzw. den Auslöseschwellwert A in entsprechender Weise an der Verlauf solcher ermittelter ISTwerte anzupassen. Überdies gestattet die Erfindung, durch Divisionen zeitliche ISTmittelwerte zu bilden und damit z.B. auch die bisherige Dauer der wichtigsten Phasen des Unfallgeschehens zu berücksichtigen, wodurch die Recheneinheit z.B. auch Straßenlöcher oder Bordsteinkanten unterscheiden kann von Auffahrunfällen auf große bzw. schwere Hindernisse, vor allem weil die Recheneinheit auch nahezu verzugslos und kontinuierlich den momentanen Auslöseschwellwert A an den momentanen bzw. bisherigen Verlauf des betreffenden - partiellen oder gesamten - ermittelten ISTwert besonders feinfühlig anpassen kann.

Für die Algorithmen, gemäß denen die Recheneinheit den momentanen Auslöseschwellwert A erfindungsgemäß, passend zum jeweiligen Fahrzeugtyp, festlegt, gibt es viele Möglichkeiten. Darunter gibt es auch besonders leicht realisierbare Algorithmen:

Um verzugslos und kontinuierlich - und damit besonders feinfühlig in meistens kleinen Schritten - den Auslöseschwellwert A an den bisherigen Verlauf des Verzögerungssignales a und / oder an davon ermittelte ISTwerte anzupassen, kann der Auslöseschwellwert A z.B. vom Betrag eines IST-Verzögerungsmittelwertes abhängig gemacht werden. Dazu kann also die Recheneinheit den momentanen Auslöseschwellwert A mittels einer Division eines momentan ermittelten

* z.B. des partiellen oder des gesamten IST-Geschwindigkeitsverlustes ∆V durch eine Zeitdauer
* z.B. durch die gesamte bisherige Zeitdauer (tx-t1) oder durch einen Teil davon

und damit durch Ermittlung eines entsprechenden IST-Verzögerungsmittelwertes $\bar{a}$ festsetzen. Ein in dieser Weise festgesetzter Auslöseschwellwert A ändert sich dann in der Regel verhältnismäßig gleichmäßig statt sprunghaft entsprechend den jeweils momentanen Änderungen des betreffenden IST-Verzögerungsmittelwertes $\bar{a}$.

Die Recheneinheit kann den Auslöseschwellwert A z.B. in der Weise vom Betrag eines solchen IST-Verzögerungsmittelwertes $\bar{a}$ abhängig machen, daß der Auslöseschwellwert A mit steigendem (bzw. fallendem) Betrag des IST-Verzögerungsmittelwertes kleiner (bzw. größer) wird. Dies gestattet, die Auslösung bei kurzen harten Stößen durch z.B. Straßenlöcher oder Bordsteinkanten zu vermeiden, weil ein $\bar{a}$,

* besonders wenn dieses $\bar{a}$ durch Division von partiellen Geschwindigkeitsverlusten ∆V durch die gesamte bisherige Unfalldauer (tx-t1) gebildet wird,

immer kleinere Beträge annimmt, je länger die Zeitdauer (tx-t1) dauert. Anders formuliert: der Betrag des so ermittelten $\bar{a}$ ist besonders groß in den ersten msec des (wirklichen oder vermeintlichen) Unfalles, so daß in diesen ersten msec der Auslöseschwellwert A sehr hoch ist - nämlich zu hoch für Verzögerungssignale a, die durch Überfahren von Straßenlöchern und Bordsteinkanten entstehen. Die mit den momentanen Auslöseschwellwerten A verglichenen Fluktuationen der ermittelten ISTwerte, die erst in späteren Phasen dieses Unfalles auftreten,

* also z.B. dann auftretende Fluktuationen des betreffenden IST-Verzögerungsmittelwertes $\bar{a}$ und /

oder der betreffenden, besonders der partiellen, IST-Geschwindigkeitsverluste ΔV,

besitzen nur noch vergleichsweise wenig Einfluß auf die laufenden Fluktuationen des festzusetzenden Auslöseschwellwertes A. Ein steiler Anstieg der betreffenden ermittelten ISTwerte in diesen späteren Unfallphasen hebt also nur relativ langsam den dortigen momentanen Auslöseschwellwert A an - wodurch ein harter Crash in diesen späteren Unfallphasen die Recheneinheit rasch veranlaßt, das Schutzsystem auszulösen.

Die Erfindung gestattet, auch markante Fluktuationen des Verzögerungssignales zu berücksichtigen, die in schon vergangenen Phasen dieses Unfalles auftraten und damit z.B. für den betreffenden speziellen Fahrzeugtyp typische Phänomene darstellen für den Aufprall aus einer bestimmten Richtung und / oder für den Aufprall auf in bestimmter Weise nachgiebige Hindernisse wie Büsche; Bäume oder Tiere, oder für den Aufprall auf sehr massereiche Hindernisse wie Mauern. Dazu kann die Recheneinheit den momentanen Auslöseschwellwert A

*     nicht nur von ermittelten ISTwerten,
*     sondern auch von einem oder von mehreren gespeicherten Beträgen ("Vergangenheitswerten")

abhängig machen - also auch von Werten, die während vorhergehender Phasen dieses Unfalles von der Recheneinheit ermittelt wurden.

Dazu kann die Recheneinheit als Vergangenheitswerte z.B. früher ermittelte Geschwindigkeitsverluste ΔV benutzen, vgl. die Figuren 3 und 5, wobei die Figur 5 einen stark vergrößerten Ausschnitt aus dem Verlauf des - hier beispielhaft partiellen - Geschwindigkeitsverlustes ΔV darstellt. Die Recheneinheit kann dann zur Festsetzung des momentanen Auslöseschwellwertes A z.B. auch jene Geschwindigkeitsverluste ΔV benutzen, die beim selben Unfall zuvor - zumindest näherungsweise - dann ermittelt wurden, als das jeweils letzte Minimum ΔVmin und / oder das dem letzten Minimum ΔVmin jeweils vorhergehende Maximum ΔVmax des bisherigen Verlaufes des (z.B. partiellen) Geschwindigkeitsverlustes ΔV auftrat.

Solche Maxima und Minima sind besonders nützlich zur Unterscheidung von Unfallarten: Sie lassen nämlich der Recheneinheit erkennen, ob es sich beim vorliegenden Unfallgeschehen

*     um ein Hindernis handelt, das zunächst hart, dann aber ziemlich nachgiebig ist, wie z.B. nicht sehr dicke, abknickende Bäumchen oder Zäune oder relativ nachgiebige Teile eines gegnerischen Fahrzeuges wie z.B. dessen Kofferraum, oder vielleicht auch um ein Hindernis, auf das schräg aufgeprallt wird und daher einen zunächst harten Stoß erzeugt aber dann vergleichsweise ziemlich nachgiebig ist,

oder ob es sich beim vorliegenden Unfallgeschehen

*     um ein solches Hindernis handelt, das wenig nachgiebig ist, also entsprechend hohe Maxima erzeugt, oder vielleicht auch um ein frontal aufprallendes Hindernis, das ebenfalls entsprechend hohe Maxima erzeugen kann.

Bei der Erfindung können diese Maxima und Minima auch wenig ausgeprägte mittlere Absolutbeträge besitzen, abhängig z.B. vom Winkel der Stoßrichtung zur Längsachse des betreffenden Fahrzeugtyps. Die Erfindung kann also fein dosiert auch auf den jeweiligen Winkel der Schräge reagieren, unter welchem der Aufprall geschieht.

Versuche zeigten, daß es oft besonders günstig ist, den Auslöseschwellwert zusätzlich von weiteren Kriterien zu machen. So zeigte sich, daß man oft, zur zusätzlichen Anhebung oder Absenkung des Auslöseschwellwertes A, einen typischen Rückgang - nicht den Anstieg! - der betreffenden ermittelten Geschwindigkeitsverluste ΔV als markanten Vergangenheitswert benutzen sollte: Die Recheneinheit kann dazu z.B. die in der Figur 5 gezeigte Differenz ΔV- der maximalen und minimalen Beträge

$$\Delta V\text{-} = (\Delta V max - \Delta V min)$$

der - z.B. partiellen - Geschwindigkeitsverluste ΔV während des letzten Minimums und während des dem letzten Minimum zeitlich vorhergehenden Maximums benutzen, - und zwar in der Weise, daß der momentane Auslöseschwellwert A mit steigender (bzw. fallender) Differenz ΔV- größer (bzw. kleiner) wird.

Eine noch besser optimierte Dosierung der Anhebung / Absenkung des Auslöseschwellwertes A wird oft dadurch erreicht, daß nicht die Absolutbeträge, sondern Relativbeträge der betreffenden Differenzen ΔV- benutzt werden. Bei diesem Verfahren wird also die Differenz ΔV- z.B. zusätzlich dividiert durch den Betrag jenes Geschwindigkeitsverlustes ΔVmax, der zumindest näherungsweise für das betreffende Maximum ermittelt wurde, oder durch den Betrag jenes Geschwindigkeitsverlustes ΔVmin, der zumindest näherungsweise für das betreffende Minimum ermittelt wurde. Gerade solche Relativwerte gestatten Rückschlüsse auf die Aufprallrichtung - und auch auf sonstige typische Unfallmerkmale wie den Aufprall auf Pfähle oder auf einen seitenversetzten Aufprall, - jeweils abhängig vom betreffenden Fahrzeugtyp und feststellbar durch die Auswertung entsprechender Crashteste.

Um im Rahmen der Benutzung solcher Relativwert-Ermittlungen indirekt vor allem auch noch die IST-Fahrzeuggeschwindigkeit näherungsweise aus den gemessenen IST-Verzögerungswerten a erkennen und berücksichtigen zu können, kann die Recheneinheit jene Differenz

$$\Delta V\text{-} = (\Delta V max - \Delta V min)$$

zwischen den letzten Minimum und dem zeitlich unmittelbar vorhergehenden Maximum zumindest näherungsweise auch dividieren durch den Betrag der Zeitspanne $\Delta t$ zwischen dem betreffenden Minimum und Maximum, vgl. die Figur 5. Versuche zeigten, daß diese spezielle, auch zeitlich relativierte Differenz ziemlich aussagekräftig für die momentane Fahrzeuggeschwindigkeit ist - meistens auch wichtiger als die Differenz zwischen sonstigen Maxima und Minima.

Um insbesondere bei einem rasch aufeinander folgenden Mehrfachaufprall, z.B. bei einem Aufprall auf nahe beieinander stehende Bäumchen oder Zaunteile - oder bei einem Aufprall mit relativ weichen Teilen des eigenen Fahrzeuges auf ein fremdes Hindernis - , nur den jeweils letzten dieser Aufpralle als wesentlich mitentscheidend für die folgende Festsetzung des Auslöseschwellwertes A benutzen zu können, kann die Recheneinheit den Auslöseschwellwert A so festsetzen, daß dieser Schwellwert NICHT, bzw. NICHT MEHR, beeinflußt wird von der Differenz der Beträge der sonstigen Vergangenheitswerte ($\Delta V max - \Delta V min$) zwischen einem zeitlich vor dem letzten Minimum liegenden Minimum $\Delta V min$ und dem dazu vorhergehenden oder sonstigen Maximum $\Delta V max$.

Damit kann die Recheneinheit bei der ersten Variante der Erfindung z.B. folgenden, jeweils einen sehr einfachen, rasch durch der Recheneinheit erledigbaren Algorithmus zur Festsetzung des Auslöseschwellwerte A benutzen:

$$A = K2 \cdot (\Delta V\text{-})/(\Delta V max \cdot \Delta t) - K1 \cdot \bar{a} + K3.$$

K1, K2 und K3 sind Konstante / Gewichtsfaktoren, welche gestatten, die Gewichte der einzelnen Komponenten auf der rechten Seite dieser Gleichung so festzulegen, daß der Algorithmus optimal an die jeweiligen Eigenschaften von verschiedenen Fahrzeugtypen bei deren Schrägaufprall und Frontalaufprall angepaßt ist. Die Struktur dieser Gleichung als solche braucht dann darüber hinaus für unterschiedliche Fahrzeugtypen i.allg. nicht mehr neu entwickelt zu werden. Hier ist, mathematisch definiert, der Auslöseschwellwert A also von insgesamt drei Komponenten abhängig, von denen

* die eine Komponente K1$\cdot\bar{a}$ vom Betrag des IST-Verzögerungsmittelwertes abhängt, gewichtet durch K1,
* eine weitere Komponente K2 $\cdot$ ($\Delta V\text{-}$)/($\Delta V max \cdot \Delta t$) von den betreffenden Vergangenheitswerten abhängt, gewichtet durch K2,
* wohingegen die dritte Komponente K3 additiv zu den beiden anderen Komponenten als überlagerte Konstante / Gewichtsfaktor hinzugefügt wird, wodurch ein Grundbetrag für den Auslöseschwellwert A festgesetzt ist, der die Bedeutung der beiden anderen, zeitlich variablen Komponenten des Auslöseschwellwertes A auf einen gewünschten Wert vermindern kann, ohne den Rechenaufwand für die Recheneinheit erheblich zu verkomplizieren.

Diese relativ einfache Gleichung für den Auslöseschwellwert A zeichnet sich also u.a. dadurch aus, daß die beiden zeitabhängigen Komponenten jeweils durch ein Glied einer mathematischen Differenz dargestellt sind, in welcher

* die eine, den Subtrahenden bildende Komponente den - durch K1 gewichteten - Betrag des IST-Verzögerungsmittelwertes $\bar{a}$ enthält, der z.B. nach der Gleichung

$$\bar{a} \quad = \quad ( \int_{\alpha-\Delta\tau}^{\alpha} a \cdot dt ) \ / \ (tx-t1)$$

aus dem partiellen IST-Geschwindigkeitsverlust $\Delta V$, dividiert durch die gesamte bisherige Unfalldauer, ermittelt wird
* und die andere, den Minuenden bildende Komponente die - durch K2 gewichtete - in doppelter Hinsicht (nämlich zeitlich und hinsichtlich Amplituden) relativierte Differenz der Beträge der betreffenden Vergangenheitswerte enthält.

Um zusätzlich besonders sehr harte Frontalaufpralle bei hoher Fahrgeschwindigkeit des betreffenden Fahrzeuges besonders leicht erkennen zu können, kann die Recheneinheit den momentanen Auslöseschwellwert A auch noch von einem Steigungswert abhängig machen, den die Recheneinheit durch eine zusätzliche zeitliche Differentiation des Beschleunigungssignales a ermittelt.

Der Algorithmus kann zusätzlich - in für sich bekannter Weise - JA/NEIN-Kriterien, die nicht aus analogen bzw. endlichen Beträgen von ISTwerten gewonnen werden, berücksichtigen, um Auslöseschwellwerte in Sprüngen statt kontinuierlich zu verändern. Dazu können zusätzlich einer oder mehrere Sensoren, vgl. S1 in der Figur 3, ein oder mehrere JA/NEIN-Kriterien an die Recheneinheit R liefern, z.B. um in für sich bekannter Weise unterschiedliche Grenzwerte zu benutzen, z.B. abhängig davon,

* ob Beifahrersitze belegt sind oder nicht, um das speziell für diese Sitze angebrachte Schutzsystem nur dann auszulösen, wenn dort wirklich ein Beifahrer sitzt, oder
* ob der zu schützende Insasse einen Sicherheitsgurt anlegte oder nicht, weil ein Angegurteter das Schutzsystem erst bei einem stärkeren Crash benötigt als ein Nichtangegurteter.

Um mit einfachen Mitteln rasch und präzise von Sensoren gelieferte analoge Ausgangssignale in digitale Beträge umwandeln und daraus die ISTwerte I ermitteln und diese ISTwerte I mittels des Algorithmusses auswerten zu können, kann die Recheneinheit R mindestens einen A/D-Wandler enthalten, der analoge Ausgangssignale eines oder mehrerer Sensoren S in digitale ISTwerte I umwandelt.

## Patentansprüche

1.  Verfahren zur Steuerung der Steuereinheit eines Fahrzeuginsassen-Schutzsystemes, um bei einem genügend starken Unfall das Schutzsystem auszulösen, wobei

    -   die Steuereinheit einen oder mehrere, bei dem Unfall Sensorsignale (a) liefernde Sensoren (S) enthält,
    -   die Steuereinheit eine Recheneinheit (R) enthält,

        *   welche während des Unfalles anhand der Sensorsignale einen, oder mehrere verschiedene, den Unfallverlauf charakterisierende ISTwerte feststellt,
        *   welche selbsttätig einen zeitlich variablen Auslöseschwellwert (A) ständig neu festsetzt, der abhängig vom Momentanwert des ISTwertes / der ISTwerte ist,
        *   und welche Vergleiche zwischen einem oder mehreren ISTwerten und dem, dem ISTwert jeweils zugeordneten Auslöseschwellwert durchführt,

    -   der aktuelle Auslöseschwellwert (A) durch einen aktuellen Verzögerungsmittelwert ($\bar{a}$) bestimmt ist,
    -   der Betrag des Auslöseschwellwerts (A) mit steigendem (bzw. fallendem) Betrag des aktuellen Verzögerungsmittelwertes ($\bar{a}$) größer (bzw. kleiner) wird,
    -   der aktuelle Auslöseschwellwert (A) auch abhängt von einem oder mehreren gespeicherten Beträgen („Vergangenheitswerte"), die während vorhergehender Phasen dieses Unfalles ($\Delta V$ max, $\Delta V$ min) durch die Recheneinheit ermittelt wurden, dadurch gekennzeichnet,
    -   daß die Recheneinheit eine zeitliche Integration ($\Delta V$) des Verzögerungssignals (a) über eine im Vergleich zur Dauer des Verzögerungssignales kurze Zeitdauer ($\Delta T$) durchführt, wodurch beim Unfall als ermittelter aktueller Wert laufend angenähert ein auf diese kurze Zeitdauer bezogener aktueller partieller Geschwindigkeitsverlust ($\Delta V$) ermittelt wird,
    -   daß als Vergangenheitswerte das letzte Minimum ($\Delta V$ min), und/oder das dem letzten Mini-

mum vorhergehende Maximum ($\Delta V$ max), des bisherigen Verlaufes des partiellen Geschwindigkeitsverlustes ($\Delta V$) verwendet werden.

2.  Verfahren zur Steuerung der Steuereinheit eines Fahrzeuginsassen-Schutzsystemes, um bei einem genügend starken Unfall das Schutzsystem auszulösen, wobei

    -   die Steuereinheit einen oder mehrere, bei dem Unfall Sensorsignale (a) liefernde Sensoren (S) enthält,
    -   die Steuereinheit eine Recheneinheit (R) enthält,

        *   welche während des Unfalles anhand der Sensorsignale einen, oder mehrere verschiedene, den Unfallverlauf charakterisierende ISTwerte feststellt,
        *   welche selbsttätig einen zeitlich variablen Auslöseschwellwert (A) ständig neu festsetzt, der abhängig vom Momentanwert des ISTwertes / der ISTwerte ist,
        *   und welche Vergleiche zwischen einem oder mehreren ISTwerten und dem, dem ISTwert jeweils zugeordneten Auslöseschwellwert durchführt,

    -   der aktuelle Auslöseschwellwert (A) durch einen aktuellen Verzögerungsmittelwert ($\bar{a}$) bestimmt ist,
    -   der Betrag des Auslöseschwellwerts (A) mit steigendem (bzw. fallendem) Betrag des aktuellen Verzögerungsmittelwertes ($\bar{a}$) größer (bzw. kleiner) wird,
    -   der aktuelle Auslöseschwellwert (A) auch abhängt von einem oder mehreren gespeicherten Beträgen („Vergangenheitswerte"), die während vorhergehender Phasen dieses Unfalles ($\Delta V$ max, $\Delta V$ min) durch die Recheneinheit ermittelt wurden,
    -   die Recheneinheit als Integration eine zeitliche Integration ($\Delta V$) des Verzögerungssignals (a) über die gesamte bisherige, ab einem Startzeitpunkt (1) eingetretene Dauer (tx-t1) durchführt, wodurch beim Unfall laufend angenähert ein seit dem Startzeitpunkt eingetretener gesamter aktueller Geschwindigkeitsverlust ($\Delta V$) ermittelt wird,
        dadurch gekennzeichnet,
    -   daß als Vergangenheitswerte das letzte Minimum ($\Delta V$ min), und/oder das dem letzten Minimum vorhergehende Maximum ($\Delta V$ max), des bisherigen Verlaufes des gesamten Geschwindigkeitsverlustes ($\Delta V$) verwendet werden.

3.  Verfahren nach Patentanspruch 1 oder 2, mit einem bei einem Unfall ein Verzögerungssignal (a) liefernden Crashsensor (S),
**dadurch gekennzeichnet**,

- daß die Recheneinheit (R) während des Unfalles ab einem Startzeitpunkt (1) zur Ermittlung des ISTwertes / von ISTwerten jeweils zumindest eine Integration, nämlich eine zeitliche Integration des Verzögerungssignals (a), durchführt,
- und daß die Recheneinheit einen mit Hilfe der Integration ermittelten ISTwert ($\Delta V$) mit dem festgesetzten momentanen Auslöseschwellwert vergleicht.

4. Verfahren nach einem der vorhergehenden,
**dadurch gekennzeichnet**,

- daß als Vergangenheitswert zumindest näherungsweise die Differenz ($\Delta V$-) der Beträge der Geschwindigkeitsverluste ($\Delta V$) während des letzten Minimums und während des dem letzten Minimum vorhergehenden Maximums in der Weise benutzt wird, daß der Betrag des aktuellen Auslöseschwellwerts mit steigender (bzw. fallender) Differenz ($\Delta V$-) kleiner (bzw. größer) wird.

5. Verfahren nach Patentanspruch 4,
**dadurch gekennzeichnet**,

- daß diese Differenz ($\Delta V$-) auch dividiert wird durch den Betrag jenes Geschwindigkeitsverlustes ($\Delta V$max), der zumindest näherungsweise für das betreffende Maximum ermittelt wurde.

6. Verfahren nach Patentanspruch 5,
**dadurch gekennzeichnet**,

- daß diese Differenz ($\Delta V$-) auch dividiert wird durch den Betrag jenes Geschwindigkeitsverlustes ($\Delta V$min), der zumindest näherungsweise für das betreffende Minimum ermittelt wurde.

7. Verfahren nach einem der Patentansprüche 4 bis 6,

- daß die Differenz ($\Delta V$-) zumindest näherungsweise auch dividiert wird durch den Betrag der Zeitspanne ($\Delta t$) zwischen dem betreffenden Minimum und Maximum.

8. Verfahren nach einem der Patentansprüche 4 bis 7,
**dadurch gekennzeichnet**,

- daß der Auslöseschwellwert von der Differenz der Beträge der sonstigen Vergangenheitswerte zwischen einem vor dem letzten Minimum ($\Delta V$min) liegenden Minimum ($\Delta V$min) und

dem dazu vorhergehenden Maximum ($\Delta V$max) nicht bzw. nicht mehr beeinflußt wird.

9. Verfahren nach Patentanspruch 1 oder 2 und nach einem der Patentansprüche 4 bis 8,
**dadurch gekennzeichnet**,

- daß der Auslöseschwellwert von mindestens zwei Komponenten abhängt, von denen

  * die erste Komponente vom Betrag des aktuellen Verzögerungsmittelwertes ($\bar{a}$) abhängt,
  * und die zweite Komponente von gespeicherten Beträgen der Vergangenheitswerte ($\Delta V$-) abhängt.

10. Verfahren nach Patentanspruch 9,
**dadurch gekennzeichnet**,

- daß die beiden Komponenten jeweils durch ein Glied einer mathematischen Differenz darstellbar sind, in welcher

  * die erste, den Subtrahenden bildende Komponente den - evtl. gewichteten, also z.B. mit einer ersten Konstante / Gewichtsfaktor (K1) multiplizierten - Betrag des aktuellen Verzögerungsmittelwertes ($\bar{a}$) enthält
  * und die zweite, den Minuenden bildende Komponente die - evtl. gewichtete, also z. B. mit einer zweiten Konstante / Gewichtsfaktor (K2) multiplizierte - Differenz ($\Delta V$-) der Beträge der betreffenden Vergangenheitswerte enthält.

11. Verfahren nach einem der vorhergehenden Patentansprüche,
**dadurch gekennzeichnet**,

- daß der aktuelle Auslöseschwellwert (A) zu vorbestimmten Zeiten (z.B. in einer späten Unfallphase, z.B. >27 msec) einen konstanten Wert besitzt.

12. Verfahren nach einem der vorhergehenden Patentansprüche,
**dadurch gekennzeichnet**,

- der Algorithmus Produkte unterschiedlicher ISTwerte (relativer ISTwerte Ix/Rx) enthält.

13. Verfahren nach einem der vorhergehenden Patentansprüche,
**dadurch gekennzeichnet**,

- daß zusätzlich ein oder mehrere Sensoren (S1) JA-/NEIN-Kriterien an die Recheneinheit liefern, und

- der Algorithmus zusätzlich diese JA-/NEIN-Kriterien verarbeitet.

**14.** Schaltungsanordnung mit einer Recheneinheit, die bei einem genügend starken Crash ein Schutzsystem für Insassen eines Fahrzeuges auslöst, zur Durchführung des Verfahrens nach einem der vorhergehenden Patentansprüche.

**Claims**

**1.** Process for controlling the control unit of a system for protecting vehicle occupants with a view to triggering the protection system if the accident is sufficiently serious, in which

- the control unit contains one or more sensors (S), which supply sensor signals (a) during the accident,
- the control unit contains a computing unit (R)

  * which, during the accident, establishes on the basis of the sensor signals one ACTUAL value or a plurality of different ACTUAL values characterizing the course of the accident,
  * which automatically and continuously redefines a time-variable triggering threshold value (A), which is dependent on the instantaneous value of the ACTUAL value/the ACTUAL values,
  * and which carries out comparisons between one or more ACTUAL values and the triggering threshold value respectively assigned to the ACTUAL value,

- the current triggering threshold value (A) is determined by a current deceleration average value ($\bar{a}$),
- the amount of the triggering threshold value (A) becomes greater (or smaller) with a rising (or falling) amount of the current deceleration average value ($\bar{a}$),
- the current triggering threshold value (A) also depends on one or more stored amounts ("past values") which have been determined by the computing unit during previous phases of this accident ($\Delta V$max, $\Delta V$min), characterized
- in that, as past values, the last minimum ($\Delta V$min), and/or the maximum ($\Delta V$max) preceding the last minimum, of the progression thus far of the partial loss in speed ($\Delta V$) are used.

**2.** Process for controlling the control unit of a system for protecting vehicle occupants with a view to triggering the protection system if the accident is sufficiently serious, in which

- the control unit contains one or more sensors (S), which supply sensor signals (a) during the accident,
- the control unit contains a computing unit (R)

  * which, during the accident, establishes on the basis of the sensor signals one ACTUAL value or a plurality of different ACTUAL values characterizing the course of the accident,
  * which automatically and continuously redefines a time-variable triggering threshold value (A), which is dependent on the instantaneous value of the ACTUAL value/the ACTUAL values,
  * and which carries out comparisons between one or more ACTUAL values and the triggering threshold value respectively assigned to the ACTUAL value,

- the current triggering threshold value (A) is determined by a current deceleration average value ($\bar{a}$),
- the amount of the triggering threshold value (A) becomes greater (or smaller) with a rising (or falling) amount of the current deceleration average value ($\bar{a}$), characterized
- in that the current triggering threshold value (A) also depends on one or more stored amounts ("past values") which have been determined by the computing unit during previous phases of this accident ($\Delta V$max, $\Delta V$min),
- in that the computing unit carries out as the integration a time integration ($\Delta V$) of the deceleration signal (a) over the entire duration thus far (tx-t1), commencing from starting time (1), as a result of which during the accident a total current loss in speed ($\Delta V$) occurring since the starting time is determined continually by approximation, characterized
- in that, as past values, the last minimum ($\Delta V$min), and/or the maximum ($\Delta V$max) preceding the last minimum, of the progression thus far of the total loss in speed ($\Delta V$) are used.

**3.** Process according to Patent Claim 1 or 2, having a crash sensor (S) which in the event of an accident supplies a deceleration signal (a), characterized

- in that, for determining the ACTUAL value/ACTUAL values, the computing unit (R) carries out during the accident, from a starting time (1), in each case at least one integration, namely a time integration of the deceleration signal (a),

- and in that the computing unit compares an ACTUAL value (ΔV) determined with the aid of the integration with the defined instantaneous triggering threshold value.

4. Process according to one of the preceding patent claims, characterized

- in that, as the past value, the difference (ΔV-) between the amounts of the losses in speed (ΔV) during the last minimum and during the maximum preceding the last minimum is used, at least by approximation, in such a way that the amount of the current triggering threshold value becomes smaller (or greater) with a rising (or falling) difference (ΔV-).

5. Process according to Patent Claim 4, characterized

- in that this difference (ΔV-) is also divided by the amount of that loss in speed (ΔVmax) which has been determined, at least by approximation, for the relevant maximum.

6. Process according to Patent Claim 5, characterized

- in that this difference (ΔV-) is also divided by the amount of that loss in speed (ΔVmin) which has been determined, at least by approximation, for the relevant minimum.

7. Process according to one of Patent Claims 4 to 6, characterized

- in that the difference (ΔV-) is also divided, at least by approximation, by the amount of the time period (Δt) between the relevant minimum and maximum.

8. Process according to one of Patent Claims 4 to 7, characterized

- in that the triggering threshold value is not or no longer influenced by the difference between the amounts of the other past values between a minimum (ΔVmin) lying before the last minimum (ΔVmin) and the maximum (ΔVmax) preceding it.

9. Process according to Patent Claim 1 or 2 and according to one of Patent Claims 4 to 8, characterized

- in that the triggering threshold value depends on at least two components, of which

  * the first component depends on the amount of the current deceleration average value ($\bar{a}$),

  * and the second component depends on stored amounts of the past values (ΔV-).

10. Process according to Patent Claim 9, characterized

- in that the two components can respectively be represented by an element of a mathematical difference, in which

  * the first component, forming the subtrahend, contains the - possibly weighted, that is for example multiplied by a first constant/weighting factor (K1) - amount of the current deceleration average value ($\bar{a}$)

  * and the second component, forming the minuend, contains the - possibly weighted, that is for example multiplied by a second constant/weighting factor (K2) - difference (ΔV-) between the amounts of the relevant past values.

11. Process according to one of the preceding patent claims, characterized

- in that the current triggering threshold value (A) has a constant value at predetermined times (for example in a late accident phase, for example >27 msec).

12. Process according to one of the preceding patent claims, characterized

- in that the algorithm contains products of different ACTUAL values (relative ACTUAL values Ix/Rx).

13. Process according to one of the preceding patent claims, characterized

- in that additionally one or more sensors (S1) supply YES/NO criteria to the computing unit, and
- the algorithm additionally processes these YES/NO criteria.

14. Circuit arrangement having a computing unit which triggers a protection system for occupants of a vehicle if the crash is sufficiently serious for carrying out the process according to one of the preceding patent claims.

**Revendications**

1. Procédé permettant de commander l'unité de commande d'un système de protection pour occupants d'un véhicule, afin de déclencher le système de protection en cas d'accident suffisamment violent,

selon lequel

- l'unité de commande contient un ou plusieurs capteurs (S) délivrant des signaux de capteurs (a) lors de l'accident,
- l'unité de commande contient une unité de calcul (R)

  * qui, pendant l'accident et à l'aide des signaux de capteur, détermine une ou plusieurs valeurs réelles caractérisant le déroulement de l'accident qui sont différentes,
  * qui détermine automatiquement, en permanence d'une manière nouvelle, une valeur de seuil de déclenchement (A) qui est variable dans le temps et qui dépend de la valeur momentanée de la valeur réelle/des valeurs réelles
  * et qui exécute des comparaisons entre une ou plusieurs valeurs réelles et la valeur de seuil de déclenchement associée à chaque valeur réelle,

- la valeur de seuil de déclenchement (A) actuelle est déterminée au moyen d'une valeur moyenne de décélération ($\bar{a}$) actuelle et
- la valeur de seuil de déclenchement (A) devient plus grande (ou plus petite) lorsque la valeur moyenne de décélération ($\bar{a}$) actuelle s'élève (ou s'abaisse) - la valeur de seuil de déclenchement actuelle dépendant aussi d'une ou plusieurs valeurs rangés en mémoire ("valeurs passées ") qui ont été déterminés par l'unité de calcul pendant des phases passées de cet accident ($\Delta$Vmax, $\Delta$Vmin), caractérisé en ce que
- l'unité de calcul exécute une intégration ($\Delta$V) du signal de décélération (a) dans le temps, sur une période de temps ($\Delta$t) qui est brève en comparaison de la durée du signal de décélération, de sorte que, lors de l'accident, une perte de vitesse ($\Delta$V) actuelle partielle, rapportée à cette brève période de temps, est déterminée en continu d'une manière approchée en tant que valeur actuelle déterminée,
- et en ce que le dernier minimum ($\Delta$Vmin) et/ou le maximum ($\Delta$Vmax) précédant le dernier minimum, de la variation de la perte de vitesse ($\Delta$V) partielle ou totale qui s'est présentée jusqu'à l'instant considéré sont utilisés en tant que valeurs passées.

2. Procédé permettant de commander l'unité de commande d'un système de protection pour occupants d'un véhicule, afin de déclencher le système de protection en cas d'accident suffisamment violent, selon lequel

- l'unité de commande contient un ou plusieurs capteurs (S) délivrant des signaux de capteurs (a) lors de l'accident,
- l'unité de commande contient une unité de calcul (R)

  * qui, pendant l'accident et à l'aide des signaux de capteur, détermine une ou plusieurs valeurs réelles caractérisant le déroulement de l'accident qui sont différentes,
  * qui détermine automatiquement, en permanence d'une manière nouvelle, une valeur de seuil de déclenchement (A) qui est variable dans le temps et qui dépend de la valeur momentanée de la valeur réelle/des valeurs réelles
  * et qui exécute des comparaisons entre une ou plusieurs valeurs réelles et la valeur de seuil de déclenchement associée à chaque valeur réelle,

- la valeur de seuil de déclenchement (A) actuelle est déterminée au moyen d'une valeur moyenne de décélération ($\bar{a}$) actuelle et
- la valeur de seuil de déclenchement (A) devient plus grande (ou plus petite) lorsque la valeur moyenne de décélération ($\bar{a}$) actuelle s'élève (ou s'abaisse) la valeur de seuil de déclenchement actuelle dépendant aussi d'une ou plusieurs valeurs rangés en mémoire (《 valeurs passées 》) qui ont été déterminés par l'unité de calcul pendant des phases passées de cet accident ($\Delta$Vmax, $\Delta$Vmin),
- et en tant qu'intégration, l'unité de calcul exécute une intégration ($\Delta$V) du signal de décélération (a) dans le temps, sur toute la durée (tx - t1) qui s'est écoulée jusqu'à l'instant considéré à partir d'un instant initial (1), de sorte que, lors de l'accident, une perte de vitesse ($\Delta$V) actuelle totale, qui s'est présentée depuis l'instant initial, est déterminée en continu d'une manière approchée, caractérisé en ce que
- le dernier minimum ($\Delta$Vmin) et/ou le maximum ($\Delta$Vmax) précédant le dernier minimum, de la variation de la perte de vitesse ($\Delta$V) partielle ou totale qui s'est présentée jusqu'à l'instant considéré sont utilisés en tant que valeurs passées.

3. Procédé selon la revendication 1 ou la revendication 2, avec un capteur de collision (S) délivrant un signal de décélération (a) lors d'un accident, caractérisé

- en ce que, pendant l'accident et à partir d'un instant initial (1), pour la détermination de la valeur réelle/des valeurs réelles, l'unité de calcul (R) exécute chaque fois au moins une intégration, plus précisément une intégration du signal de décélération (a) dans le temps,

- et en ce que l'unité de calcul compare une valeur réelle ($\Delta V$), déterminée au moyen de l'intégration, à la valeur de seuil de déclenchement momentanée déterminée,
- en ce que le dernier minimum ($\Delta V$min) et/ou le maximum ($\Delta V$max) précédant le dernier minimum, de la variation de la perte de vitesse ($\Delta V$) partielle ou totale qui s'est présentée jusqu'à l'instant considéré sont utilisés en tant que valeurs passées.

4. Procédé selon l'une des revendications précédentes, caractérisé

- en ce que la différence ($\Delta V$-) des valeurs des pertes de vitesse ($\Delta V$) pendant le dernier minimum et pendant le maximum précédant le dernier minimum est utilisée, au moins d'une manière approchée, en tant que valeur passée, d'une manière telle que la valeur de seuil de déclenchement actuelle est plus petite (ou plus grande) lorsque la différence ($\Delta V$-) s'élève (ou s'abaisse).

5. Procédé selon la revendication 4, caractérisé

- en ce que cette différence ($\Delta V$-) est aussi divisée par la valeur de la perte de vitesse ($\Delta V$max) qui a été déterminée, au moins d'une manière approchée, pour le maximum considéré.

6. Procédé selon la revendication 5, caractérisé

- en ce que cette différence ($\Delta V$-) est aussi divisée par la valeur de la perte de vitesse ($\Delta V$min) qui a été déterminée, au moins d'une manière approchée, pour le minimum considéré.

7. Procédé selon l'une des revendications 4 à 6, caractérisé

- en ce que la différence ($\Delta V$-) est aussi divisée, au moins d'une manière approchée, par la valeur de l'intervalle de temps ($\Delta t$) séparant le minimum et le maximum considérés.

8. Procédé selon l'une des revendications 4 à 7, caractérisé

- en ce que la valeur de seuil de déclenchement n'est pas influencée, ou n'est plus influencée, par la différence des autres valeurs passées entre un minimum ($\Delta V$min), situé avant le dernier minimum ($\Delta V$min), et le maximim précédant ce dernier.

9. Procédé selon la revendication 1 ou 2, et selon l'une des revendications 4 à 8, caractérisé

- en ce que la valeur de seuil de déclenchement dépend d'au moins deux composantes dont

  * la première composante dépend de la valeur moyenne de décélération (a) actuelle
  * et la seconde composante dépend des valeurs passées ($\Delta V$-) qui sont rangés en mémoire.

10. Procédé selon la revendication 9, caractérisé

- en ce que les deux composantes peuvent être constituées chacune par un terme d'une différence mathématique dont

  * la première composante, constituant le terme qu'on soustrait, contient - d'une manière éventuellement pondérée, c'est-à-dire par exemple multiplié par une première constante/facteur de pondération (K1) - la valeur moyenne de décélération (a) actuelle
  * et la seconde composante, constituant le terme dont au soustrait, contient - d'une manière éventuellement pondérée, c'est-à-dire par exemple multipliée par une seconde constante/facteur de pondération (K2), la différence ($\Delta V$-) des valeurs passées considérées.

11. Procédé selon l'une des revendications précédentes, caractérisé

- en ce que la valeur de seuil de déclenchement (A) actuelle possède une valeur constante à des instants préfixés (par exemple dans une phase tardive d'accident, par exemple > 27 ms).

12. Procédé selon l'une des revendications précédentes, caractérisé en ce que

- l'algorithme contient des produits de valeurs réelles différentes (valeurs réelles relatives Ix/Rx).

**13.** Procédé selon l'une des revendications précédentes,
caractérisé

- en ce qu'en sus, un ou plusieurs capteurs (S1) délivrent des critères OUI/NON à l'unité de calcul et
- l'algorithme traite en sus ces critères OUI/NON.

**14.** Agencement de circuit comportant une unité de calcul, qui, lors d'une collision suffisamment violente, déclenche un système de protection des occupants d'un véhicule, pour la mise en oeuvre d'un procédé selon l'une des revendications précédentes.

FIG 1

FIG 2

FIG 3

FIG 4

FIG 5